# EUROPEAN PATENT SPECIFICATION

(11) **EP 3 585 580 B1**
(45) Date of publication and mention of the grant of the patent: **07.10.2026**
(21) Application number: 17897259.2
(22) Date of filing: 21.08.2017
(51) Int. Cl.: B29C 45/14, B29C 45/37, B29L 31/00, G06Q 30/00, G06Q 10/08, G06Q 30/06, G06Q 50/02

(54) **SECURE PLATFORM AND DATA REPOSITORY FOR FUR SKIN, OR FEATHER COMMODITIES**
SICHERE PLATTFORM UND DATENSPEICHER FÜR FELLHAUT ODER FEDERWAREN
PLATE-FORME SÉCURISÉE ET RÉFÉRENTIEL DE DONNÉES POUR ARTICLES DE FOURRURE, DE PEAU OU DE PLUMES

(30) Priority: 24.02.2017 US 201715441755
(43) Date of publication of application: 01.01.2020
(73) Proprietor: PIEL.com S.A., Panama (PA)
(72) Inventor: RUBMAN, Scott, East Haven, CT 06512 (KY); GRAHAM, Douglas, East Haven, CT 06512 (US)
(74) Representative: Page White Farrer
(86) International application number: PCT/US2017/047774
(87) International publication number: WO 2018/156197

(56) References cited:
- CN-A- 106 096 795
- KR-A- 20080 084 994
- US-A1- 2003 228 604
- US-A1- 2008 059 330
- US-A1- 2014 046 698
- EUROPEAN COMMISSION: "Study on the labelling of products from cloned animals and their offspring", 1 November 2015 (2015-11-01), pages 1 - 84, XP093318391, Retrieved from the Internet <URL:https://food.ec.europa.eu/document/download/47710708-ceec-49e9-8192-1183f01a8a52_en> [retrieved on 20250924]

## Description

### CROSS-REFERENCE TO RELATED APPLICATIONS

The present disclosure claims priority to U.S. Patent Application No. 15/441,755 filed on February 24, 2017.

### FIELD OF INVENTION

The present disclosure is directed to a platform and data repository for fur, skin, or feather commodities (such as leather skins and other hides or skins, including reptile skin, fish skin, ostrich skin, and bird feathers). More particularly, the present disclosure is directed to a platform and repository that provides for the digital identification and the adjudication of the provenance of fur pelts and articles or leather goods based upon and backed up by DNA.

### BACKGROUND

The business-to-business side of the fur industry involves the farming of animals, wildlife trapping and the subsequent purchase of fur pelts for the manufacture of garments or other articles. Likewise, the business-to-business side of the leather industry involves the farming of animals and the purchase of leather skins for the manufacture of garments or articles. Fur pelts, leather skins, and feathers are typically available in limited supply from farmers, ranchers, or trappers, and may be of varying quality. A purchaser may determine the quality of the pelts, skins, or feathers through personal inspection, or through verification by a trusted seller or intermediary. Therefore, the business-to-business side of the fur and leather industries is primarily conducted in a face-to-face auction environment on limited occasions. Such auctions require purchasers travel to locations throughout the world to procure raw product. Alternatively, the purchaser may engage an agent or purchase pelts, skins, or feathers from a broker (or a chain of intermediaries) that purchased the pelts, skins, or feathers through an auction or a private treaty with particular farmers, ranchers, or trappers. A manufacturer may also purchase pelts, skins, or feathers directly from a farmer, rancher, or trapper.

The manufacturer then manufactures garments or other articles and may sell the articles to department stores, independent stores, or leased facilities. The manufacturer may sell the articles through a supply chain of distributors. Alternatively, the manufacturer may sell directly to consumers. The consumer can determine the quality and authenticity of the garment through a visual inspection or by trusting the representations of the seller.

CN106096795A discloses a method for tracking and verifying the provenance of fur or leather by taking a first DNA sample, storing it with associated data and an identifier, and subsequently comparing it with a second DNA sample.

### SUMMARY OF THE INVENTION

The invention is defined by the appended claims.

In one embodiment, a platform based upon and backed up by DNA provides an online marketplace for business-to-business transactions of fur commodities, skin commodities (such as leather skins or other hides or skins, including reptile, fish and ostrich skin), and feather commodities. The platform allows ranchers or trappers, amongst others, to sell or buy directly to or from garment makers or other customers or members of the value chain.

A method of tracking a provenance of fur, skins, and feathers is also provided. The method can track the provenance of the fur, skin, or feathers from farming or trapping to the finished garment or accessory, in an actual or virtual marketplace throughout the entire value chain. The method includes providing a live animal, a fur pelt, a feather, or leather skin, optionally imaging the live animal, the fur pelt, the feather, or the leather skin, and removing or imaging a DNA sample from the live animal, the fur pelt, the feather, or leather skin. The method further includes storing at least one of the DNA sample, a DNA image, and information associated with the DNA sample at which time a digital identification number, or facsimile, shall be assigned. The DNA sample can be used to identify the original pelt at any point in its subsequent value chain.

The method also includes assigning a globally unique identifier number to the live animal, the fur pelt, the feather, or leather skin and storing the identifier number. The use of such identifiers may help prevent fraud, theft and/or counterfeiting. Verification can be repeated at any point and would involve comparing a sample taken, whether actual or virtual, from a live animal, a pelt, feather, skin, or garment or any part of a future pelt, feather, skin, or garment and comparing it to the stored sample, whether actual or virtual, from the original pelt. The method further includes selling the live animal, the fur pelt, the feathers, or leather skin and storing sale information and associating the sale information with at least one of the identifier number, the DNA sample, and the information associated with the DNA sample.

In another embodiment, a method of tracking a provenance of a fur, feathers, or a leather skin includes providing at least one of a live animal, a fur pelt, a feather, and a leather skin, removing a DNA sample from the at least one of the live animal, the fur pelt, the feather, and the leather skin, and storing the DNA sample. The method may further include assigning a globally unique identifier number to the at least one of the live animal, the fur pelt, the feather, and the leather skin and storing the identifier number. The method further includes selling the at least one of the live animal, the fur pelt, the feather, and the leather skin and storing sale information and associating the sale information with at least one of the identifier number and the DNA sample.

In yet another embodiment, a method of tracking a provenance of a fur, feathers, or a leather skin includes providing at least one of a live animal, a fur pelt, a feather, and a leather skin and imaging the at least one of the live animal, the fur pelt, the feather, and the leather skin. The method may also include assigning a globally unique identifier number to the at least one of the live animal, the fur pelt, the feather, and the leather skin and storing the identifier number. The method further includes selling the at least one of the live animal, the fur pelt, the feather, and the leather skin and storing sale information and associating the sale information with the identifier number.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a chart showing one embodiment of a distribution path and registry for fur pelts, fur articles, feathers, leather skins, and leather goods; and
**Figure 2** is a flow chart showing one embodiment of an auction method.

### DETAILED DESCRIPTION

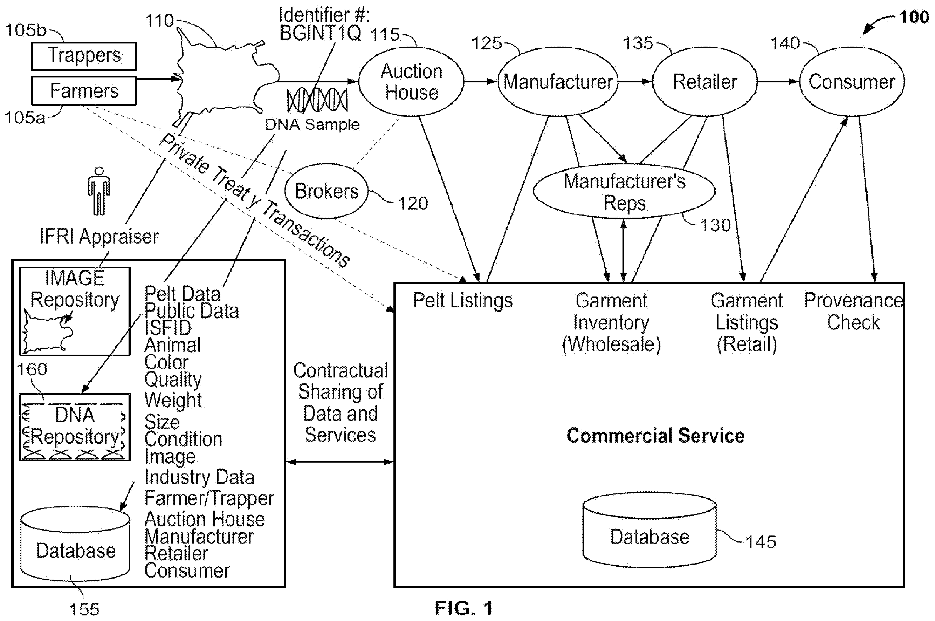

**Figure 1** is a chart illustrating a platform **100** that provides a distribution path and registry for fur pelts, fur articles, feathers, leather skins, other hides or skins (such as reptile skin, fish skin, or ostrich skin), and leather or skin goods. The distribution path begins with farmers (or ranchers) **105a** and trappers **105b** that supply pelts, skins, or feathers **110.** The farmers and ranchers may own the animals, or provide stables or stud animals.

Each particular animal, fur, pelt, skin, or feather may associated with a unique identifier number. The unique identifier number may be assigned by the farmer **105a** or trapper **105b** as shown in **Figure 1****,** or by another entity later in the chain. Information about the animal, fur, pelt, skin, or feather may be associated with the unique identifier number. The information may be updated as sales, transfers, or other relevant events occur, as will be explained in more detail below.

In one embodiment, the farmers **105a** and trappers **105b** provide the pelts, skins, feathers **110** and their derivative rights to a commodities market and/or an auction house **115.** Alternatively, the farmers **105a** and trappers **105b** may sell the pelts, skins, or feathers directly to a surplus supplier, factory, or a primary or secondary market.

Alternatively, the farmers **105a** and trappers **105b** may provide the pelts, skins, or feathers **110** to a broker **120.** The broker **120** in turn provides the pelts, skins, feathers, or their derivative rights to a commodities market, an auction house **115,** a manufacturer **125** or other market, such as a surplus supplier, factory, or other primary or secondary market.

In one embodiment, brokers **120** go to auctions and buy pelts, skins, or feathers **110** for their own account and hold them for future sale. The broker **120** is not selling or storing on behalf of a principal but rather for themselves, and reaps profits on the buy and future sale. Alternatively, when the farmer or trapper provides the pelts, skins, or feathers to a broker **120,** the farmer or trapper maintains ownership of the pelts, skins, or feathers, and merely engages the broker **120** to facilitate a sale between the farmer **105a** or trapper **105b** and a downstream purchaser, such as a garment manufacturer **125** or other market, such as a surplus supplier, factory, or other secondary market.

The farmer, trapper, or broker may then engage an auction house to facilitate a sale with a downstream purchaser, such as the garment manufacturer **125,** a broker, or other market, such as a surplus supplier, factory, or other primary or secondary market. The auction house may physically obtain the pelts, skins, or feathers, or the auction house may acquire the rights to auction the pelts, skins, or feathers while the physical pelts, skins, or feathers are maintained in a separate location. In either embodiment, the farmer, trapper, or broker retains title to the pelts, skins, or feathers, or the auction house may acquire title. The auction house then facilitates the sales and the pelts, skins, or feathers. The pelts, skins, or feathers may be sold on consignment, and the broker or auction house receives a commission on the sale. In an alternative embodiment, ownership of the pelts, skins, or feathers may be transferred prior to the auction.

In all cases, the owner of the pelts, skins, or feathers **110** (whether it is a farmer **105a,** a trapper **105b,** an auction house **115,** a broker **120,** manufacturer **125,** or other market, such as a surplus supplier, factory, or other primary or secondary market) may elect to sell pelts, skins, or feathers (or facilitate the sale of pelts, skins, or feathers) as they become available or store the pelts, skins, or feathers in anticipation of a later sale. For example, the owner of the pelts, skins, or feathers may wish to sell pelts, skins, or feathers immediately if the price is at a desirable level, if the owner is in need of capital, or if the owner does not wish to incur storage costs.

In another example, the owner of the pelts, skins, or feathers may opt to store the pelts, skins, or feathers for later sale if the owner believes that the future supply or demand for pelts, skins, or feathers would lead to a higher sale price at a later date. As another example, an owner may opt to store the pelts, skins, or feathers in a warehouse to service customer needs as they arise. The owner may employ a single, central warehouse, or a number of distributed warehouses. The pelts, skins, or feathers may be stored or sorted according to genetically coded information. Robots may be employed to assist in the storing or sorting. Such warehouses may be used in a secondary market, such as a commodities pelt market. If a warehouse or factory has excess pelts, skins, or feathers, it may sell them on the exchange.

In yet another example, the owner may wish to sell (or a buyer wishes to buy) a specific number of pelts, skins, or feathers of a particular quality or color. In this example the owner may store pelts, skins, or feathers until the desired number is reached. In such instances, the owner may store the pelts, skins, or feathers himself or store the pelts, skins, or feathers at a third party repository.

In still another embodiment, the exchange may be used for the sale of derivative rights to the pelts, skins, or feathers instead of, or in addition to the actual pelts, skins, or feathers. The derivative rights may include short sales and long sales of commodities, including pelts, skins, feathers, garments, and other commodities, or the contracting of future purchases and sales of pelts, skins, or feathers, garments, and other commodities. Derivative rights may be employed in the case of breeders of in the use of stud animals. The derivative rights may be structured as a commodity future, commodity forward, commodity option, or commodity swap.

From the description above, it should be understood that the system and method of tracking a provenance of a fur, feathers, or a leather skin may be employed using known sales channels and existing markets. In other words, sales or transfers of pelts, skins, or feathers, garments, and other commodities in this system may follow any market model, including, without limitation, auctions, direct sales, brokered sales, and commodity market exchanges.

The farmers **105a** and trappers **105b** may elect to bundle a plurality of pelts, skins, or feathers **110** for sale. For example, fur pelts may be sold in bundles of 60, because a fur coat is often manufactured from 60 fur pelts. Alternatively, the pelts, skins, or feathers may be sold in bundles of 10, 20, 30, or any number of pelts, skins, or feathers. In one embodiment, an individual farmer **105a** or trapper **105b** may transfer any number of pelts, skins, or feathers to a broker **120,** and the broker **120** will retain the pelts, skins, or feathers until a pre-determined number of pelts, skins, or feathers is reached.

After the auction house **115** obtains possession of the pelts, skins, or feathers **110** or acquires a right to broker a sale of pelts, skins, or feathers **110,** the auction house **115** may sell the pelts, skins, or feathers (or facilitate a sale of the pelts, skins, or feathers) through an in-person auction or through an online auction. An online auction, such as an auction hosted by FURS.com, provides a marketable pelt or skin exchange that allows sellers to electronically link with buyers to sell their products at any time, rather than during the limited occasions provided by in-person auctions. Quality grades may be assigned using a quantitative pelt, feather, or skin grading system based on DNA or genetic coding. Disputes will be settled through arbitration or mediated with a fur institute or other organization. Alternatively, disputes may be resolved by a government entity.

In an online auction system, additional information may be made available to help buyers make their purchasing decisions. For example, a website hosting the online auction may further include reviews from fashion industry experts, video of fur fashion events, and live customer service agents to assist in the selection and purchase of the products.

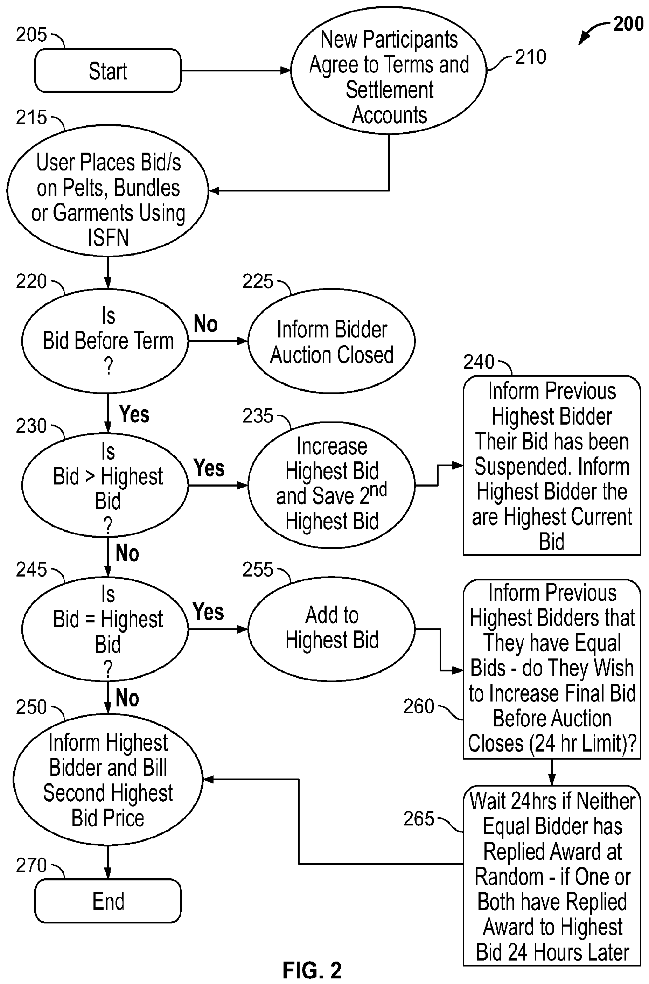

**Figure 2** is a flow chart showing one embodiment of an auction method **200.** In the illustrated embodiment, the auction method **200** is a second price algorithm. In one embodiment, the auction method **200** is performed by a computer in an online auction. In an alternative embodiment, the auction method **200** is performed by a human. While certain steps are shown as occurring in a series, it should be understood that the order of steps may be rearranged, or certain steps may occur simultaneously.

At the start **205** of the auction **200,** the new participants agree to terms and settlement accounts **210.** Each user may place one or more bids on pelts, skins, or feathers, bundles, or garments using an identification number **215.** In an alternative embodiment, the bid may be made without reference to an identification number.

After a new bid is placed, the system determines whether the auction is open **220.** If the term of the auction has expired, the bidder is informed that the auction has closed **225.** If the auction is still open, the system determines if the new bid is greater than the highest bid **230.** If the new bid is greater than the highest bid, the system increases the previous highest bid and saves the second highest bid **235.** The system then informs the previous highest bidder that his or her bid has been superseded and informs the new bidder that he or she has the highest current bid **240.**

If the new bid is not greater than the highest bid (at **230**), the system determines if it is equal to the highest bid **245.** If the new bid is not equal to the highest bid, the highest bidder is informed at the end of the auction, and is billed at the second highest bid price **250.**

If the new bid is equal to the highest bid, the system adds the new bid to the highest bid **255**. The system then informs the highest bidders that they have equal bids, and asks each bidder if they wish to increase their final bids before the auction closes, or within a predetermined time **260.** While **Figure 2** shows a predetermined time of 24 hours, it should be understood that any amount of time may be selected.

The system then waits for the predetermined time **265.** If neither equal bidder has replied, the item is awarded at random. If one or both of the bidders have increased their bids, the item is awarded to the highest bidder. The highest bidder is informed at the end of the auction, and is billed at the second highest bid price **250.** The auction method then ends **270.**

While the auction method **200** shown in **Figure 2** is a second price algorithm, it should be understood that a first bid algorithm may be employed. First bid algorithms are more commonly used in existing auction houses.

The results of the auction method **200** may be fed into an artificial intelligence system to track the sales. The sales data can be used to match the supply of pelts, skins, or feathers to meet demand. For example, the artificial intelligence system may include a predictive engine that predicts future demand based on recent or historical demand.

Referring back to **Figure 1****,** the auction house **115** typically sells pelts, skins, or feathers **110** to a manufacturer **125**. The manufacturer **125** then manufactures garments or other articles and may supply the articles to a manufacturer's representative or broker **130.** Exemplary manufacturer's representatives include wholesalers and distributors. The manufacturer may sell the fur articles to the manufacturer's representatives **130,** or may maintain ownership of the fur articles while the manufacturer's representatives facilitate sales to a retailer **140.** Exemplary retailers **140** include, without limitation: department stores, independent stores, online stores and leased facilities. The retailer **140** then sells the fur article to a consumer **140.**

Alternatively, the manufacturer **125** may sell directly to retailers **135,** without using manufacturer's representatives **130.** As another alternative, the manufacturer **125** may sell directly to consumers **140.**

In addition to illustrating a distribution path for pelts, skins, or feathers **110,** **Figure** 1 also shows means by which one or more of the pelts, skins, or feathers **110** may be appraised or authenticated. In the illustrated embodiment, the appraisal or initial authentication is performed before a farmer **105a** or trapper **105b** sells or otherwise transfers the pelt, feathers, or skin **110.** However, it should be understood that an appraisal or authentication process may be performed at any time.

The appraisal may be performed by a third party appraiser **150.** The appraiser **150** may appraise the pelt, feathers, or skin **110** by performing a physical inspection of the pelt, feathers, or skin **110.** Alternatively, the appraiser **150** may appraise the pelt, feathers, or skin **110** by reviewing genetic digital pelt or skin information. A quality grade may be assigned using a quantitative pelt, feather, or skin grading system.

In one embodiment, an identification number is physically embedded in the pelt, feathers, or skin **110.** For example, the identification number may be printed or sprayed on the pelt, feathers, or skin **110.** Alternatively, the identification number may be associated with an RFID or other electronic device that is attached or embedded in the pelt, feathers, or skin **110.** Such an electronic device may be a nano chip or other discrete device that is not visible once embedded in the pelt or skin. The electronic device may provide wireless connectivity through radio frequency signals, including such protocols as WIFI or BLUETOOTH or the equivalent thereof. Thus, the electronic device may be configured to communicate with a specialized RFID reader or a generalized computing device, such as a computer, artificial intelligence, phone, tablet, or smart devices such as smart hub.

Referring back to **Figure 1****,** the pelt, feathers, or skin **110** may also be imaged using a scanner or camera (not shown). The image may be a high definition image, and may be a two dimensional or a three dimensional image. The image of the pelt, feathers, or skin **110** may be stored in a private database **155** for later appraisal or for later comparison to a pelt, feather, or skin for authentication purposes. Additional information may also be stored in the private database **155** with the image, or instead of the image. It should be understood, however, that the imaging step is optional in this process. In some embodiments, only information about a pelt is stored. In other alternative embodiments, information and a sample of the pelt is stored.

The information may be stored in the private database **155** at the time the image is stored, or it may be stored in the private database **155** at a later time. For example, additional information may be stored in the private database **155** each time the pelt, feathers, or skin is transferred to a new owner. Exemplary information includes, without limitation: an identification number, an animal type, a color, a quality grade, a weight, a condition, a name or identifier associated with the farmer **105a** or trapper **105b** that supplied the pelt, feathers, or skin **110,** a name or identifier associated with an auction house **115** that acquired the pelt or skin **110** (or acquired the right to auction the pelt, feathers, or skin), a name or identifier associated with a broker **120** that acquired the pelt, feathers, or skin **110,** a name or identifier associated with a manufacturer **125** that acquired the pelt, feathers, or skin **110,** a name or identifier associated with an appraiser **150** that appraised the pelt, feathers, or skin **110,** a name or identifier associated with a manufacturer's representative **130** that acquired the pelt, feathers, or skin **110,** a name or identifier associated with a retailer **135** that acquired the pelt, feathers, or skin **110,** a name or identifier associated with a consumer **140** that acquired the pelt, feathers, or skin **110,** or a name or identifier associated with any other entity that acquired, inspected, appraised, or held the pelt, feathers, or skin **110.**

In addition to imaging the pelt **110,** the farmer **105a** or trapper **105b** may provide a DNA sample from blood, a guard hair, a long hair, or a leather portion (*i.e.,* a tissue sample) of the pelt **110** or a portion of the feather skin, or other equivalent sample. It should be understood that the DNA sample may be obtained from a live animal or a deceased animal. In the case of a live animal, the DNA may be collected by a blood sample, tissue sample, saliva sample, semen sample, or hair sample. In one known embodiment, a handheld or robotic device is used to remove a tissue sample from a live animal. In one embodiment, the animal may be tagged at or about the same time as the DNA sample is taken. For example, a blood sample may be taken from an animal's ear and the ear may be tagged with an identifier that corresponds with an identifier on a blood sample vial.

The DNA sample may also be provided by another entity at a later stage of the distribution of a pelt, feather, or skin. The DNA sample may be mapped or tested on sight, or at a molecular level and may be sent to a mapping or testing location. In an alternative embodiment, DNA information about a pelt, feather, or skin may be gathered by scanning the pelt, feather, or skin. In such an embodiment, it will not be necessary to physically remove hairs, feathers, or a leather portion from the pelt or skin.

In one embodiment, the DNA sample is provided by removing the guard hair, long hair, or leather portion of the pelt or skin **110** or other equivalent sample. In an alternative embodiment, the DNA sample is provided by scanning an image of the guard hair, long hair, or leather portion of the pelt or skin **110** or other equivalent sample. After the image is scanned, the digital information may be stored. In either embodiment, the DNA sample may be certified through a certification process. The certification may be a licensed certification performed by a third party, such as a government agency or a non-government organization (e.g., independent laboratories or a fur institute). In other embodiments, the licensed certification may be performed by one or more individuals associated with the auction house, the farmer, or the trapper. In all cases, processes may exist for revoking or cancelling the licensed certification in the event that a garment is stolen, or in the case of mistake or fraud.

DNA analysis may be performed locally using a processing device. Exemplary processing devices include, without limitation, a desktop computer, artificial intelligence, a laptop computer, a server, a tablet, a smart phone, a cell phone, or other computerized device. The analysis may be performed using a camera or scanning device that is integral with the processing device, or through an attachment to the processing device that allows the insertion of pelt, skin, feathers, or hide hairs or scans at a molecular level. The processing device analyzes the result and stores it in a secure digital environment. Alternatively, the sample may be sent to an outside vendor for analysis.

After the DNA sample is mapped tested, the DNA information may also be stored in the private database **155** with the associated identification number. Additionally, or in the alternative, the DNA sample may be stored in a secure location, such as a DNA repository **160.** The DNA repository may be overseen by a trusted third party to maintain security. The DNA sample can be used to identify the original pelt at any point in its subsequent value chain. In all cases, the DNA information may include identification of known diseases or possible diseases that may be associated with a particular gene or gene sequence in the DNA sample.

In one embodiment, an animal or a portion of an animal may be cloned. In such an example, the cloned DNA may be an exact match of the original. In such instances, information about the clone may also be stored in the data repository. In other instances, the cloned DNA may include a variant or a marker to identify it as distinct from the original DNA. In such instances, information about the variant or marker may also be stored in the data repository. In all instances, the cloned DNA may be categorized as a sub-category or a distinct category from the original DNA. The cloned animal, pelt, skin, fur, or feathers may be processed differently as it progresses through the value chain.

The data in the DNA repository may be securely accessed by authorized individuals through a networked device, such as a computer, artificial intelligence, smart phone, or tablet. The data in the DNA repository may be analyzed for a variety of reasons. For example, the DNA samples may be analyzed as part of epidemiological study to determine a genetic basis for disease, defects, or other undesirable characteristic. In some instances, if a gene or sequence of genes is identified as causing a disease or other undesirable characteristic, breeders may use that information to avoid breeding animals that carry the identified gene or gene sequence. Artificial intelligence or an algorithm may be employed to automate analysis and presentation of statistical information regarding defects and disease. Alternatively, the data may be manually analyzed to identify diseases and defects.

Physical security measures may be employed for storing DNA samples. Exemplary physical security includes, without limitation: physical and electronic locks, cameras, lasers, and robots or security guards.

Additionally, digital security measures may be employed for storing an image of the pelt, feathers, or skin **110** and other information related to the pelt, feathers, or skin **110.** Exemplary digital security measures include, without limitation: spanning tree protocol (STP), homomorphic encryption, Internet key exchange, IPsec, Kerberos, point-to-point protocol, off-the-record messaging, transport layer security, and ZRTP.

Economics may be considered when determining how to treat the DNA sample. At times, it may be more cost effective to map or test a DNA sample and securely store the digital data associated with the map or test. At other times, it may be more cost effective to securely store the physical DNA sample, and only perform DNA mapping or testing if the provenance of a particular pelt, feathers, or skin is challenged.

As shown in **Figure 1****,** from the time of birth of the animal through each sale or transfer or processing of a pelt, feathers, or skin **110** is recorded in a commercial database **145.** Such recordation is performed for both the transfer of an individual pelt, feathers, or skin, and the transfer of a garment containing the pelt, feathers, or skin. In this manner, the chain of custody of the pelt, feathers, or skin may be tracked, and the provenance of the pelt, feathers, or skin may therefore be verified, thus reducing fraud and counterfeiting. Notably, the provenance of the pelt, feathers, or skin may be verified at any point along the distribution path. In other words, an auction house **115,** broker **120,** manufacturer **125,** manufacturer representative **130,** retailer **135,** or consumer **140** may verify the provenance of the pelt, feathers, skin, or article by comparing the identification number of a particular pelt, feathers, or skin on hand with the identification number stored in a database. If any irregularities, such as fraud or counterfeiting, are suspected, then the DNA of the particular pelt, feathers, or skin on hand can be compared to the DNA in the repository **160.** Such administrative process will be handled via the creation of a Fur Institute. Verification by the Fur Institute can be repeated at any point and would involve comparing a sample taken, whether actual or virtual, from a pelt, feather, skin, or garment or any part of a future pelt, skin, feather, or garment and comparing it to the stored sample, whether actual or virtual, from the original pelt.

Additionally, or in the alternative, the transfer information or DNA information related to the pelt, feathers, or skin **110** may be stored in a distributed ledger or blockchain. The distributed ledger may be replicated on tens, hundreds, thousands, or more computers around the world, and may be made publicly available. The distributed ledger employs a consensus mechanism to update the ledger in light of transfers of the pelt, feathers, or skin **110.** The consensus mechanism includes repeatedly feeding the data through a cryptographic "hash" function which boils a block of data down into a string of digits of a given length. This hashing provides an easy means to convert data to a hash, but makes it difficult or even impossible to convert a hash back to the data. Although the hash does not contain the data, it is still unique to the particular data. Any attempt to change the data would therefore change the resulting hash. A changed ledger on one computer (or multiple computers) would be rejected when compared to other computers that maintain copies of the distributed ledger.

In one embodiment, the pelt, feathers, or skin transfer information or DNA information is stored on a pre-existing distributed ledger. One example of a pre-existing distributed ledger is the blockchain associated with Bitcoin, a digital currency. In an alternative embodiment, the pelt, feathers, or skin transfer information is stored on a distributed ledger that created for the purpose of identifying pelts, skins, or feathers.

While the present disclosure has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the disclosure, in its broader aspects, is not limited to the specific details, the representative apparatus and method, and illustrative examples shown and described. Accordingly, departures may be made from such details without departing from the scope of the applicant's general inventive concept.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

## Claims

1. A method of verifying the provenance of at least one of a fur pelt, a feather, and a leather skin in a computer based system, the method comprising:
providing an animal, wherein a DNA of the animal comprises a cloned DNA distinguishing from an original DNA by a variant or a marker;
removing a first DNA sample from the animal;
storing the first DNA sample and information associated with the first DNA sample in a computer-based system, wherein the information includes information about the variant or the marker;assigning a globally unique identifier number to the animal;
storing the globally unique identifier number in the computer-based system;
associating the globally unique identifier number with the information associated with the first DNA sample in the computer-based system;
receiving sale information related to the animal;
storing the sale information related to the animal and associating the sale information with at least one of the globally unique identifier number and the information associated with the first DNA sample;
providing at least one of a fur pelt, a feather, and a leather skin;
removing a second DNA sample from the at least one of the fur pelt, the feather, and the leather skin; and
comparing the first DNA sample with the second DNA sample to verify the provenance of the at least one of a fur pelt, a feather, and a leather skin.

2. The method of claim 1, wherein the storing of the information associated with the first DNA sample includes storing the information associated with the first DNA sample in a blockchain employing a consensus mechanism.

3. The method of claim 2, wherein the storing the globally unique identifier number includes updating the blockchain.

4. The method of claim 2 or 3, wherein the storing sale information and associating the sale information includes updating the blockchain.

5. The method of claim 1, wherein the storing of the information associated with the first DNA sample in the computer-based system includes storing the information associated with the first DNA sample in a database (155).

6. The method of claim 5, wherein the information associated with the first DNA sample is stored in the database (155) using at least one of spanning tree protocol, homomorphic encryption, Internet key exchange, IPsec, Kerberos, point-to-point protocol, off-the-record messaging, transport layer security, and ZRTP.

7. The method of any preceding claim, wherein the assigning the globally unique identifier number includes generating a random number in a number sequence and checking if the generated random number is on an issued list.

8. The method of any preceding claim, further comprising selling derivative rights to the animal through a commodities market.

9. The method of claim 8, wherein the derivative rights are structured as one of a commodity future, commodity forward, commodity option, or commodity swap.

10. The method of claim 8 or 9, wherein the derivative rights include short sales of the animal.

11. The method of any one of claims 8 - 10, wherein the derivative rights include long sales of the animal.

12. The method of claim 1, further comprising physically embedding the globally unique identifier number in the animal.

13. The method of claim 12, wherein the physically embedding the globally unique identifier number includes tagging an ear of the animal.

14. The method of claim 12, wherein the physically embedding the globally unique identifier number includes one of printing and spraying the globally unique identifier number on the animal.

15. The method of claim 12, wherein the physically embedding the globally unique identifier number includes embedding a radio frequency identification device in the animal.

## Patentansprüche

1. Verfahren zum Verifizieren der Herkunft von mindestens einem von Folgendem: Pelz, Feder und Lederhaut in einem computerbasierten System, wobei das Verfahren umfasst:
Bereitstellen eines Tieres, wobei eine DNA des Tieres eine geklonte DNA umfasst, die sich von einer ursprünglichen DNA durch eine Variante oder einen Marker unterscheidet;
Entnehmen einer ersten DNA-Probe von dem Tier;
Speichern der ersten DNA-Probe und von Informationen, die mit der ersten DNA-Probe assoziiert sind, in einem computerbasierten System, wobei die Informationen Informationen über die Variante oder den Marker einschließen; Zuweisen einer global eindeutigen Identifikatornummer zu dem Tier;
Speichern der global eindeutigen Identifikatornummer in dem computerbasierten System;
Assoziieren der global eindeutigen Identifikatornummer mit den Informationen, die mit der ersten DNA-Probe assoziiert sind, in dem computerbasierten System;
Empfangen von Verkaufsinformationen, die sich auf das Tier beziehen;
Speichern der Verkaufsinformationen, die sich auf das Tier beziehen, und Assoziieren der Verkaufsinformationen mit mindestens einem von der global eindeutigen Identifikatornummer und den Informationen, die mit der ersten DNA-Probe assoziiert sind;
Bereitstellen von mindestens einem von Folgendem: Pelz, Feder und Lederhaut;
Entnehmen einer zweiten DNA-Probe von dem mindestens einen von Pelz, Feder und Lederhaut; und
Vergleichen der ersten DNA-Probe mit der zweiten DNA-Probe, um die Herkunft des mindestens einen von Pelz, Feder und Lederhaut zu verifizieren.

2. Verfahren nach Anspruch 1, wobei das Speichern der Informationen, die mit der ersten DNA-Probe assoziiert sind, das Speichern der Informationen, die mit der ersten DNA-Probe assoziiert sind, in einer Blockchain, die einen Konsensmechanismus einsetzt, einschließt.

3. Verfahren nach Anspruch 2, wobei das Speichern der global eindeutigen Identifikatornummer das Aktualisieren der Blockchain einschließt.

4. Verfahren nach Anspruch 2 oder 3, wobei das Speichern der Verkaufsinformationen und das Assoziieren der Verkaufsinformationen das Aktualisieren der Blockchain einschließt.

5. Verfahren nach Anspruch 1, wobei das Speichern der Informationen, die mit der ersten DNA-Probe assoziiert sind, in dem computerbasierten System das Speichern der Informationen, die mit der ersten DNA-Probe assoziiert sind, in einer Datenbank (155) einschließt.

6. Verfahren nach Anspruch 5, wobei die Informationen, die mit der ersten DNA-Probe assoziiert sind, in der Datenbank (155) unter Verwendung mindestens eines von Spanning-Tree-Protokoll, homomorpher Verschlüsselung, Internet Key Exchange, IPsec, Kerberos, Point-to-Point-Protokoll, Off-the-Record-Messaging, Transport Layer Security und ZRTP gespeichert werden.

7. Verfahren nach einem der vorstehenden Ansprüche, wobei das Zuweisen der global eindeutigen Identifikatornummer das Erzeugen einer Zufallszahl in einer Zahlenfolge und das Prüfen, ob die erzeugte Zufallszahl auf einer ausgegebenen Liste steht, einschließt.

8. Verfahren nach einem der vorstehenden Ansprüche, ferner umfassend das Verkaufen von Derivatrechten an dem Tier durch einen Rohstoffmarkt.

9. Verfahren nach Anspruch 8, wobei die Derivatrechte als eines von Rohstoff-Future, Rohstoff-Termingeschäft, Rohstoff-Option oder Rohstoff-Swap strukturiert sind.

10. Verfahren nach Anspruch 8 oder 9, wobei die Derivatrechte Leerverkäufe des Tieres einschließen.

11. Verfahren nach einem der Ansprüche 8 bis 10, wobei die Derivatrechte Long-Verkäufe des Tieres einschließen.

12. Verfahren nach Anspruch 1, ferner umfassend das physische Einbetten der global eindeutigen Identifikatornummer in das Tier.

13. Verfahren nach Anspruch 12, wobei das physische Einbetten der global eindeutigen Identifikatornummer das Markieren eines Ohrs des Tieres einschließt.

14. Verfahren nach Anspruch 12, wobei das physische Einbetten der global eindeutigen Identifikatornummer das Aufdrucken oder Aufsprühen der global eindeutigen Identifikatornummer auf das Tier einschließt.

15. Verfahren nach Anspruch 12, wobei das physische Einbetten der global eindeutigen Identifikatornummer das Einbetten einer Radio-Frequency-Identification-Vorrichtung (RFID-Vorrichtung) in das Tier einschließt.

## Revendications

1. Procédé permettant de vérifier la provenance d'au moins l'une parmi une fourrure, une plume et une peau en cuir dans un système informatique, le procédé comprenant :
la fourniture d'un animal, dans lequel un ADN de l'animal comprend un ADN cloné se distinguant d'un ADN d'origine par un variant ou un marqueur ;
le prélèvement d'un premier échantillon d'ADN sur l'animal ;
le stockage du premier échantillon d'ADN et des informations associées au premier échantillon d'ADN dans un système informatique, dans lequel les informations comportent des informations concernant le variant ou le marqueur ; l'attribution d'un numéro d'identificateur unique universel à l'animal ;
le stockage du numéro d'identificateur unique universel dans le système informatique ;
l'association du numéro d'identificateur unique universel aux informations associées au premier échantillon d'ADN dans le système informatique ;
la réception d'informations de vente relatives à l'animal ;
le stockage des informations de vente relatives à l'animal et l'association des informations de vente à au moins l'un parmi le numéro d'identificateur unique universel et les informations associées au premier échantillon d'ADN ;
la fourniture d'au moins l'une parmi une fourrure, une plume et une peau en cuir ;
le prélèvement d'un second échantillon d'ADN sur l'au moins l'une parmi la fourrure, la plume et la peau en cuir ; et
la comparaison du premier échantillon d'ADN avec le second échantillon d'ADN pour vérifier la provenance de l'au moins l'une parmi la fourrure, la plume et la peau en cuir.

2. Procédé selon la revendication 1, dans lequel le stockage des informations associées au premier échantillon d'ADN comporte le stockage des informations associées au premier échantillon d'ADN dans une chaîne de blocs utilisant un mécanisme de consensus.

3. Procédé selon la revendication 2, dans lequel le stockage du numéro d'identificateur unique universel comporte la mise à jour de la chaîne de blocs.

4. Procédé selon la revendication 2 ou 3, dans lequel le stockage des informations de vente et l'association des informations de vente comportent la mise à jour de la chaîne de blocs.

5. Procédé selon la revendication 1, dans lequel le stockage des informations associées au premier échantillon d'ADN dans le système informatique comporte le stockage des informations associées au premier échantillon d'ADN dans une base de données (155).

6. Procédé selon la revendication 5, dans lequel les informations associées au premier échantillon d'ADN sont stockées dans la base de données (155) à l'aide d'au moins l'un parmi les protocoles suivants : un protocole spanning tree, un chiffrement homomorphe, un échange de clés Internet, un IPsec, un Kerberos, un protocole point à point, une messagerie confidentielle, une sécurité de la couche de transport et un ZRTP.

7. Procédé selon l'une quelconque revendication précédente, dans lequel l'attribution du numéro d'identificateur unique universel comporte la génération d'un nombre aléatoire dans une séquence de nombres et la vérification de la présence ou non du nombre aléatoire généré dans une liste publiée.

8. Procédé selon l'une quelconque revendication précédente, comprenant en outre la vente de droits dérivés sur l'animal par le biais d'un marché de matières premières.

9. Procédé selon la revendication 8, dans lequel les droits dérivés sont structurés de manière à former l'un parmi un contrat à terme sur matières premières, un contrat à terme de gré à gré sur matières premières, une option sur matières premières ou un swap sur matières premières.

10. Procédé selon la revendication 8 ou 9, dans lequel les droits dérivés comportent des ventes à découvert de l'animal.

11. Procédé selon l'une quelconque des revendications 8 à 10, dans lequel les droits dérivés comportent des ventes à long terme de l'animal.

12. Procédé selon la revendication 1, comprenant en outre l'implantation physique du numéro d'identificateur unique universel dans l'animal.

13. Procédé selon la revendication 12, dans lequel l'implantation physique du numéro d'identificateur unique universel comporte l'étiquetage d'une oreille de l'animal.

14. Procédé selon la revendication 12, dans lequel l'implantation physique du numéro d'identificateur unique universel comporte l'une parmi l'impression et la pulvérisation du numéro d'identificateur unique universel sur l'animal.

15. Procédé selon la revendication 12, dans lequel l'implantation physique du numéro d'identificateur unique universel comporte l'implantation d'un dispositif d'identification par radiofréquence dans l'animal.
